# EUROPÄISCHE PATENTSCHRIFT

(11) **EP 1 360 426 B1**
(45) Veröffentlichungstag und Bekanntmachung des Hinweises auf die Patenterteilung: **13.09.2006**
(21) Anmeldenummer: 02719694.8
(22) Anmeldetag: 16.01.2002
(51) Int. Cl.: F16D 3/38

(54) **FLANSCHMITNEHMER**
FLANGE SUPPORT
ENTRAINEUR A BRIDE

(30) Priorität: 17.02.2001 DE 10107606
(43) Veröffentlichungstag der Anmeldung: 12.11.2003
(73) Patentinhaber: Spicer Gelenkwellenbau GmbH, 45143 Essen (DE)
(72) Erfinder: ERLMANN, Nikolaus, Martin, 40213 Düsseldorf (DE)
(74) Vertreter: Müller, Thomas Michael
(86) Internationale Anmeldenummer: PCT/EP2002/000354
(87) Internationale Veröffentlichungsnummer: WO 2002/066848

(56) Entgegenhaltungen:
- DE-A- 19 537 248
- FR-A- 1 229 608
- US-A- 3 589 142
- US-A- 4 637 807
- PATENT ABSTRACTS OF JAPAN vol. 015, no. 117 (M-1095), 20. März 1991 (1991-03-20) -& JP 03 009118 A (NISSAN MOTOR CO LTD), 17. Januar 1991 (1991-01-17)

## Beschreibung

Die Erfindung betrifft einen Flanschmitnehmer für Kreuzgelenke, insbesondere für Kreuzgelenke zur Übertragung hoher Drehmomente, gemäß dem Oberbegriff des Anspruchs 1.

Einen solchen Flanschmitnehmer zeigt JP 03 009118 A.

Die DE 26 36 752 A1 offenbart ein Kreuzgelenk mit zwei Gelenkgabeln, die über ein Zapfenkreuz miteinander verbunden sind. Das Zapfenkreuz umfaßt vier Zapfen, die paarweise auf einer gemeinsamen Zapfenachse liegen, wobei sich die Zapfenachsen zweier Paare rechtwinklig schneiden. Die Gelenkgabeln umfassen jeweils zwei Lagerelemente, in denen jeweils eine Lagerbohrung zur Aufnahme eines Zapfens des Zapfenkreuzes vorgesehen ist. Die Lagerelemente einer Gelenkgabel sind mittels Befestigungsschrauben mit einem Gegenflansch verbunden. Die Lagerelemente weisen hierzu jeweils zwei parallel zu einer Längsachse der Gelenkgabel verlaufende Durchgangsbohrungen auf. Im Gegenflansch sind Gewindebohrungen vorgesehen, in denen die durch die Durchgangsbohrungen geführten Befestigungsschrauben einsitzen. Die Querschnittsfläche der Lagerelemente in der Ebene, die durch das Zapfenkreuz aufgespannt ist, ist aufgrund der Durchgangsbohrungen im Vergleich zu einer ungeteilten Gelenkgabel geschwächt. Dies führt dazu, dass das maximal übertragbare Drehmoment geringer ist. Um die gleiche Drehmomentübertragungsfähigkeit Wie bei ungeteilten Gefenkgabeln zu erzielen, müssen die Lagerelemente größer ausgeführt werden, wodurch der Rotationsdurchmesser des Kreuzgelenkes vergrößert wäre.

Die DE 43 13 141 C2 zeigt einen Flanschmitnehmer für Kreuzgelenke. Der Flanschmitnehmer ist entlang einer Ebene, die entlang der Längsachse verläuft und senkrecht zu einer Bohrungsachse der Lagerbohrungen angeordnet ist, durch Stoßflächen in zwei Mitnehmerhälften geteilt. Die Stoßflächen der beiden Mitnehmerhälf ten sind mit zueinander komplementär ausgebildeten Verzahnungen versehen. An einer den Lagerabschnitten abgewandten Stirnseite weisen die Mitnehmerhälften eine Hirth-Stirnverzahnung auf, mit der die Mitnehmerhälften separat mit einem Gegenflansch einer Welle verbindbar sind. Hierzu weisen die Mitnehmerhälften Durchgangsbohrungen zum Hindurchführen von Verbindungsschrauben auf.

Aufgabe der vorliegenden Erfindung ist es, einen Flanschmitnehmer für Kreuzgelenke vorzuschlagen, der bei geteilter Flanschmitnehmer Ausführung eine möglichst hohe Drehmomentübertragung ermöglicht und vormontierbar ist.

Die Aufgabe wird erfindungsgemäß durch einen Flanschmitnehmer der eingangs genannten Art gelöst , wobei
zum Übertragen von Momenten um die Längsachse die erste Befestigungsfläche eine Verzahnung und die zweite Befestigungsfläche eine Verzahnung aufweisen,
wobei die Verzahnungen zueinander komplementär ausgebildet sind und
die Zähne der Verzahnung der ersten Befestigungsfläche und die Zähne der Verzahnung der zweiten Befestigungsfläche parallel zur ersten Bohrungsachse verlaufen.

Somit wird erzielt, dass die Querschnitte des ersten Lagerabschnitts und des zweiten Lagerabschnitts in der Ebene, die durch die Zapfen eines Zapfenkreuzes eines Kreuzgelenkes aufgespannt ist, nicht zusätzlich durch Bohrungen für Befestigungsschrauben geschwächt ist. Zudem sind keine Auflageflächen an den Seiten der Lagerabschnitte, die der Flanschplatte entfernt angeordnet sind, vorzusehen. Es wird vermieden, dass Schraubenköpfe an dem der Flanschplatte abgewandten Ende der Lagerabschnitte mit Bauteilen des anderen Flanschmitnehmers des Kreuzgelenkes bei größeren Beugewinkeln kollidieren.

Um Torsionsspannungen in den Befestigungsschrauben zu vermeiden, können die Befestigungsschrauben in Form von Dehnschrauben gestaltet sein.

Zum Verbinden des Basiselements mit dem Lagerelement können in dem Flanschabschnitt des Lagerelements erste Sacklochbohrungen mit Innengewinde vorgesehen sein, die parallel zur Längsachse verlaufen. Jeder Sacklochbohrung ist eine erste Durchgangsbohrung in der Flanschplatte des Basiselements zugeordnet, die ausgehend von der Verbindungsfläche in die Befestigungsfläche mündet, wobei die Befestigungsschrauben durch die ersten Durchgangsbohrungen hindurch gesteckt sind und in den ersten Sacklochbohrungen einsitzen.

Vorzugsweise weisen die Befestigungsschrauben Schraubenenden auf, die in der Verbindungsfläche versenkt aufgenommen sind.

Ferner können Mittel vorgesehen sein, die zum einen dazu dienen, das Basiselement mit dem Lagerelement zu verbinden, und zum anderen dazu dienen, radiale Bewegungen zwischen dem Basiselement und dem Lagerelement zu vermeiden. Hierzu kann vorgesehen sein, dass in dem Flanschabschnitt des Lagerelements dritte Sacklochbohrungen vorgesehen sind, die parallel zur Längsachse verlaufen und jeweils in eine Sacklochbohrung mit Innengewinde übergehen,
dass jeder ersten Sacklochbohrung eine dritte Durchgangsbohrung in der Flanschplatten des Basiselements zugeordnet ist, die ausgehend von der Verbindungsfläche in die erste Befestigungsfläche mündet,
wobei die dritte Durchgangsbohrung und die dritte Sacklochbohrung zusammen eine konische Innenfläche aufweisen, in die eine Spannhülse mit konischer Außenumfangsfläche eingesteckt ist, und
wobei dritte Befestigungsschrauben jeweils durch eine Durchgangsbohrung einer Spannhülse hindurch gesteckt sind und jeweils in einer der Sacklochbohrungen mit Innengewinde einsitzen.

Die dritten Befestigungsschrauben können hierbei Schraubenenden aufweisen, die in der Verbindungsfläche versenkt aufgenommen sind.

Damit sich das Lagerelement radial nach innen auf die Längsachse zu abstützen kann, kann vorgesehen sein, dass in der ersten Befestigungsfläche und in der zweiten Befestigungsfläche eine Feder-Nut-Verbindung vorgesehen ist.

Zum Verbinden des Basiselements mit dem Lagerelement kann ferner vorgesehen sein, dass in dem Flanschabschnitt des Lagerelements zweite Sacklochbohrungen mit Innengewinde vorgesehen sind, die parallel zur zweiten Bohrungsachse verlaufen und dass jeder zweiten Sacklochbohrung eine zweite Durchgangsbohrung in der Flanschplatte des Basiselements zugeordnet ist, die ausgehend von der zweiten Anlagefläche in eine Außenumfangsfläche des Basiselements mündet,
wobei zweite Befestigungsschrauben durch die zweiten Durchgangsbohrungen hindurch gesteckt sind und in den zweiten Sacklochbohrungen einsitzen.

Vorzugsweise weisen die Befestigungsschrauben Schraubenenden auf, die in der Außenumfangsfläche versenkt aufgenommen sind.

Die erste Anlagefläche und die zweite Anlagefläche weisen jeweils Mittel zum Übertragen von Kräften in der Ebene der Anlagefläche auf, die jeweils durch eine Verzahnung in der ersten Anlagefläche und durch eine Verzahnung in den zweiten Anlageflächen, die komplementär zueinander ausgebildet sind, dargestellt sein können.

Die Zähne der Verzahnung der ersten Anlagefläche und die Zähne der Verzahnung der zweiten Anlagefläche können parallel zur Längsachse verlaufen. Die Zähne der Verzahnungen der ersten Anlagefläche und die Zähne der Verzahnung der zweiten Anlagefläche können auch so verlaufen, dass sie die Längsachse in Abstand senkrecht kreuzen. Neben diesen Orientierungen der Zähne der Verzahnungen können die Zähne jedoch jeden beliebigen Winkel von 0° bis 180° relativ zu der Ebene einnehmen, welche durch die Bohrungsachse und die Längsachse aufgespannt ist.

Die Mittel zum Übertragen von Kräften in der Ebene der Anlagefläche können auch dadurch gebildet sein, dass in der zweiten Anlagefläche Ausnehmungen vorgesehen sind, in denen jeweils ein Paßstück einsitzt, das sich gegen die erste Anlagefläche abstützt.

Vorzugsweise weist die Verbindungsfläche Zentriermittel zum Zentrieren der Flanschplatte gegenüber einer Längsachse des Gegenflansches auf. Die Zentriermittel können durch eine selbstzentrierende Stirnverzahnung, insbesondere eine Hirth-Stirnverzahnung, dargestellt sein.

Der Flanschmitnehmer kann lösbar mittels Verbindungsschrauben mit einem Gegenflansch verbunden werden. Ebenso ist eine Schweißverbindung möglich.

Zum Verbinden des Flanschmitnehmers mit einem Gegenflansch kann vorgesehen sein, dass in der Flanschplatte des Basiselements Durchgangsbohrungen vorgesehen sind, die auf einem Teilumfang um die Längsachse im Bereich der ersten Befestigungsfläche gleichmäßig verteilt sind und parallel zur Längsachse verlaufen und durch die eine erste Teilanzahl von Verbindungsschrauben hindurch gesteckt ist,
dass jeder Durchgangsbohrung eine Sacklochbohrung mit Innengewinde im Lagerelement zugeordnet ist, wobei die Sacklochbohrungen in der Verlängerung der jeweiligen Durchgangsbohrung des Basiselements verlaufen und von der zweiten Befestigungsfläche ausgehen und wobei die erste Teilanzahl der Verbindungsschrauben in die Sacklochbohrungen eingeschraubt ist, dass in der Flanschplatte des Basiselements Sacklochbohrungen mit Innengewinden vorgesehen sind, die auf dem übrigen Teilumfang um die Längsachse im Bereich des ersten Lagerabschnitts gleichmäßig verteilt sind und in denen eine zweite Teilanzahl der Verbindungsschrauben eingeschraubt ist.

Alternativ kann vorgesehen sein, dass in der Flanschplatte des Basiselements Durchgangsbohrungen vorgesehen sind, die auf einem Teilumfang um die Längsachse im Bereich der ersten Befestigungsfläche gleichmäßig verteilt sind und parallel zur Längsachse verlaufen und durch die eine erste Teilanzahl von Verbindungsschrauben hindurch gesteckt ist,
dass jeder Durchgangsbohrung eine Durchgangsbohrung im Lagerelement zugeordnet ist, wobei die Durchgangsbohrung im Lagerelement in der Verlängerung der jeweiligen Durchgangsbohrung des Basiselements verlaufen und von der zweiten Befestigungsfläche ausgehend in eine zweite Spannfläche münden und wobei die erste Teilanzahl der Verbindungsschrauben ausgehend von der Verbindungsfläche durch die Durchgangsbohrung des Basiselements und durch die Durchgangsbohrung im Lagerelement durchgesteckt ist und in Innengewinde eines Gewindekörpers, der sich gegen die zweite Spannfläche abstützt, geschraubt ist,
dass in der Flanschplatte des Basiselements Durchgangsbohrungen vorgesehen sind, die auf dem übrigen Teilumfang um die Längsachse im Bereich des ersten Lagerabschnitts gleichmäßig verteilt sind, die parallel zur Längsachse verlaufen und ausgehend von der Verbindungsfläche in eine erste Spannfläche münden, wobei eine zweite Teilanzahl der Verbindungsschrauben ausgehend von der Verbindungsfläche durch die Durchgangsbohrungen gesteckt ist und in Innengewinde eines Gewindekörpers, der sich gegen die erste Spannfläche abstützt, geschraubt ist.

Hierbei ist die erste Spannfläche durch eine erste Ausnehmung in der Außenumfangsfläche des Basiselementes gebildet. Die zweite Spannfläche ist durch eine zweite Ausnehmung in der Außenumfangsfläche des Lagerelementes gebildet. Der Gewindekörper kann durch einen Ring gebildet sein, der sich gegen die erste Spannfläche und gegen die zweite Spannfläche abstützt und in einer Ebene, die durch die Längsachse und die erste Bohrungsachse aufgespannt ist, in zwei Ringelemente geteilt ist. Die Ringelemente übernehmen neben der Funktion der Spannkraftaufnahme in Längsachsenrichtung die radiale Sicherung des Lagerelementes gegenüber dem Basiselement, zum einen durch eine formschlüssige Anlage der Ringelemente an deren Innenumfangsflächen mit dem Lagerelement oder dem Basiselement sowie durch Reibschluß.

Es können Mittel vorgesehen sein, um die Lastverteilung zwischen den Verschraubungen der ersten Befestigungsschrauben und den Verschraubungen der dritten Befestigungsschrauben ausgleichen zu können. Die ersten Befestigungsschrauben können hierzu im Bereich des Schaftes verstärkt ausgeführt sein. Der Traganteil der Verschraubungen der dritten Befestigungsschrauben kann dadurch an den Traganteil der Verschraubungen der ersten Befestigungsschrauben angeglichen werden, indem der Durchmesser oder die Länge der Spannhülsen variiert wird oder ein Dehnabschnitt an den ersten Befestigungsschrauben vorgesehen ist, dessen Durchmesser variiert werden kann.

Bevorzugte Ausführungsbeispiele sind anhand der Zeichnungen erläutert.

Es zeigt
- Figur 1: einen erfindungsgemäßen Flanschmitnehmer in einer Explosionsdarstellung,
- Figur 2: das Basiselement gemäß Figur 1 in einer perspektivischen Ansicht,
- Figur 3: das Lagerelement gemäß Figur 1 in einer perspektivischen Ansicht,
- Figur 4: einen Flanschmitnehmer in einer Explosionsdarstellung, wobei die erste Anlagefläche und die zweite Anlagefläche jeweils eine Verzahnung aufweisen, deren Zähne parallel zur Längsachse verlaufen,
- Figur 5: einen Flanschmitnehmer in einer Explosionsdarstellung, wobei die erste Anlagefläche und die zweite Anlagefläche jeweils eine Verzahnung aufweisen, deren Zähne die Längsachse mit Abstand kreuzen,
- Figur 6: eine perspektivische Darstellung eines montierten Flanschmitnehmers gemäß Figur 5,
- Figur 7: ein Basiselement gemäß Figur 5 in einer perspektivischen Darstellung,
- Figur 8: ein Lagerelement gemäß Figur 5 in einer perspektivischen Darstellung und
- Figur 9: einen Teilschnitt durch einen Flanschmitnehmer gemäß Figur 5, wobei die Schnittebene entlang der Längsachse und durch eine Befestigungsschraube verläuft.

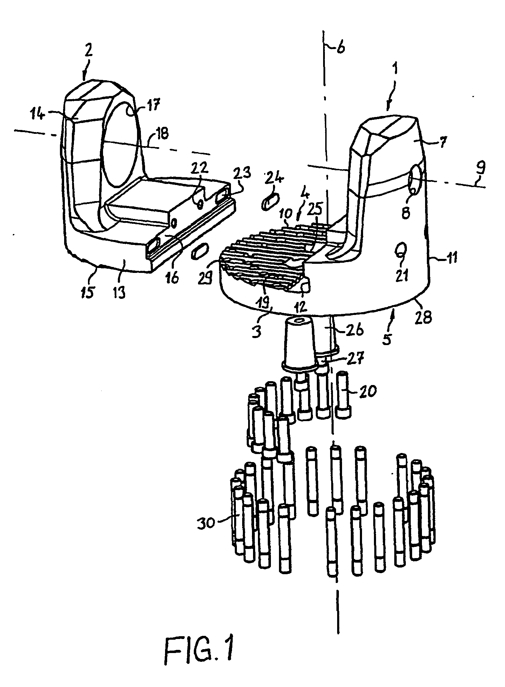

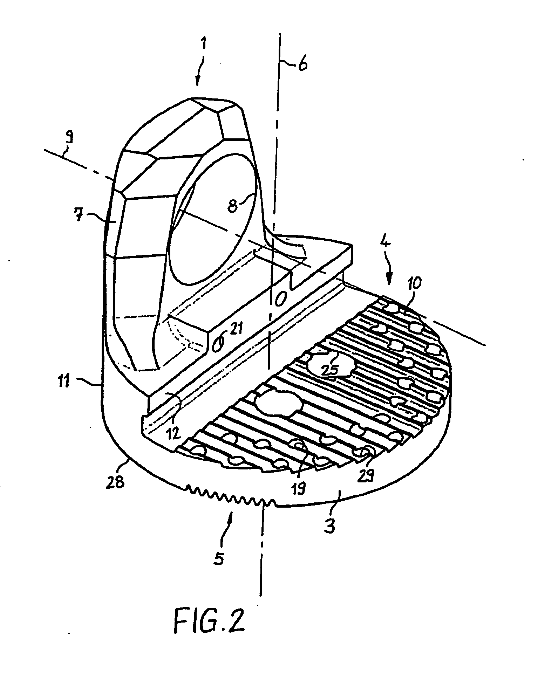

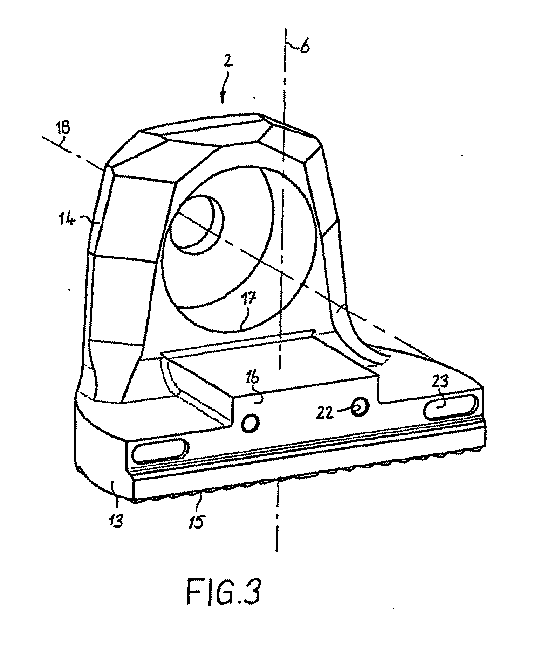

Die Figuren 1, 2 und 3 zeigen die Bauteile eines erfindungsgemäßen Flanschmitnehmers und werden im folgenden zusammen beschrieben.

Der Flanschmitnehmer umfaßt ein Basiselement 1 und ein Lagerelement 2. Das Basiselement 1 weist eine Flanschplatte 3 mit einer ersten Stirnseite 4 und einer zweiten Stirnseite 5 auf, wobei die erste Stirnseite 4 und die zweite Stirnseite 5 senkrecht zu einer Längsachse 6 angeordnet sind. Das Basiselement weist ferner einen ersten Lagerabschnitt 7 auf, der ausgehend von der ersten Stirnseite 4 vorsteht. Im ersten Lagerabschnitt 7 ist eine erste Lagerbohrung 8 mit einer ersten Bohrungsachse 9 angeordnet, wobei die erste Bohrungsachse 9 die Längsachse 6 rechtwinklig schneidet. Die erste Stirnseite 4 weist eine erste Befestigungsfläche 10 auf, die von einer koaxial zur Längsachse 6 angeordneten Außenumfangsfläche 11 des Basiselementes 1 und von einer parallel zur Längsachse 6 und am ersten Lagerabschnitt 7 angeordneten ersten Anlagefläche 12 begrenzt ist. Die erste Befestigungsfläche 10 weist eine Gradverzahnung auf, deren Zähne parallel zur ersten Bohrungsachse 9 verlaufen.

Das Lagerelement 2 weist einen Flanschabschnitt 13 und einen zweiten Lagerabschnitt 14 auf. Der Flanschabschnitt 13 bildet eine zweite Befestigungsfläche 15, die im montierten Zustand des Flanschmitnehmers mit der ersten Befestigungsfläche 10 des Basiselementes 1 in Anlage ist und welche eine zur Verzahnung der ersten Befestigungsfläche 10 komplementäre Verzahnung aufweist. Ferner bildet der Flanschabschnitt 13 eine zweite Anlagefläche 16, die entsprechend der ersten Anlagefläche 12 des Basiselementes 1 parallel zur Längsachse 6 verläuft und im montierten Zustand des Flanschmitnehmers mit dieser in Anlage ist.

Im zweiten Lagerabschnitt 14 ist eine zweite Lagerbohrung 17 mit einer zweiten Bohrungsachse 18 vorgesehen, wobei die zweite Bohrungsachse 18 koaxial zur ersten Bohrungsachse 9 angeordnet ist.

Um das Basiselement 1 und das Lagerelement 2 zu einem Flanschmitnehmer miteinander zu verbinden, sind in der Flanschplatte des Basiselementes 1 erste Durchgangsbohrungen 19 vorgesehen, die parallel zur Längsachse 6 verlaufen, von der zweiten Stirnseite 5 ausgehend in die erste Befestigungsfläche 10 münden und auf einem Teilumfang gleichmäßig um die Längsachse 6 verteilt sind. Jeder ersten Durchgangsbohrung 19 ist jeweils eine erste Sacklochbohrung im Flanschabschnitt 13 des Lagerelementes 2 zugeordnet. Die ersten Sacklochbohrungen verlaufen in Verlängerung der ersten Durchgangsbohrungen 19 parallel zur Längsachse 6 und gehen von der zweiten Befestigungsfläche 15 aus. Zum Befestigen des Lagerelementes 2 auf dem Basiselement 1 werden erste Befestigungsschrauben 20 ausgehend von der zweiten Stirnseite 5 durch die ersten Durchgangsbohrungen 19 hindurchgesteckt und in die ersten Sacklochbohrungen des Lagerelementes 2 eingeschraubt. Die Verschraubungen mit den ersten Durchgangsbohrungen 19, den ersten Sacklochbohrungen und den ersten Befestigungsschrauben 20 befinden sich vorzugsweise in Längsrichtung betrachtet im Bereich des zweiten Lagerabschnittes 14 und somit im hochbelasteten Bereich des Flanschmitnehmers.

Das Basiselement 1 weist ferner zwei zweite Durchgangsbohrungen 21 auf, die parallel zur ersten Bohrungsachse 9 verlaufen, von der Außenumfangsfläche 11 ausgehen und in die erste Anlagefläche 12 münden. Jeder zweiten Durchgangsbohrung 21 ist jeweils eine zweite Sacklochbohrung 22 zugeordnet, die in Verlängerung der jeweiligen zweiten Durchgangsbohrung 21 verlaufen und von der zweiten Anlagefläche 16 ausgehen. Die zweiten Sacklochbohrungen 22 sind mit Innengewinden versehen. Zweite Befestigungsschrauben (nicht dargestellt) lassen sich zum Befestigen des Lagerelementes 22 auf dem Basiselement 1 ausgehend von der Außenumfangsfläche 11 durch die zweiten Durchgangsbohrungen 21 hindurchstecken und in die zweiten Sacklochbohrungen 22 mit Innengewinden einschrauben.

Die zweite Anlagefläche 16 weist zudem Ausnehmungen 23 auf, in denen jeweils ein Passstück 24 einsitzt. Die Passstücke 24 nehmen Umfangskräfte auf und vermeiden eine Überbestimmtheit zu den Verzahnungen der ersten Befestigungsfläche 10 und zweiten Befestigungsfläche 15.

In der Flanschplatte 3 des Basiselementes 1 sind zudem dritte Durchgangsbohrungen 25 vorgesehen, die innerhalb des Teilumfangs angeordnet sind, auf dem die ersten Durchgangsbohrungen 19 angeordnet sind. Jeder dritten Durchgangsbohrung 25 ist jeweils eine dritte Sacklochbohrung im Flanschabschnitt 13 des Lagerelementes 2 zugeordnet. Die dritten Sacklochbohrungen verlaufen jeweils in Verlängerung einer dritten Durchgangsbohrung 25 und gehen von der zweiten Befestigungsfläche 15 aus. Die dritten Durchgangsbohrungen und die dritten Sacklochbohrungen bilden zusammen eine kegelige Innenfläche, in die eine Hülse 26 mit kegeliger Außenfläche einsitzt, um eine radiale Sicherung des auf das Basiselement 1 aufgesetzten Lagerelementes 2 zu gewährleisten. Die dritten Sacklochbohrungen gehen in Sacklochbohrungen geringeren Durchmessers mit Innengewinde über. Ferner weisen die Hülsen 26 Durchgangsbohrungen auf, die in Verlängerung der Sacklochbohrungen mit Innengewinde angeordnet sind. Nachdem die Hülsen 26 ausgehend von der zweiten Stirnseite 5 durch die dritten Durchgangsbohrungen 25 in die dritten Sacklochbohrungen eingesteckt sind, lassen sich dritte Befestigungsschrauben 27 durch die Durchgangsbohrungen der Hülsen 26 hindurchstecken und in die Sacklochbohrungen mit Innengewinden des Lagerelementes 1 einschrauben.

Um das Flanschelement mit einem Gegenflansch verbinden zu können, bildet die zweite Stirnseite 5 eine Verbindungsfläche 28 mit einer Hirth-Stirnverzahnung (teilweise dargestellt). Das Basiselement 1 weist Durchgangsbohrungen 29 für Verbindungsschrauben 30 auf, die auf einem Teilumfang um die Längsachse 6 gleichmäßig angeordnet sind, parallel zur Längsachse 6 verlaufen und ausgehend von der Verbindungsfläche 28 in die erste Befestigungsfläche 10 münden. Auf dem übrigen Teilumfang um die Längsachse 6 sind Sacklochbohrungen mit Innengewinden gleichmäßig verteilt angeordnet, die ebenfalls parallel zur Längsachse 6 verlaufen, von der Verbindungsfläche 28 ausgehen und in Längsrichtung betrachtet im Bereich des ersten Lagerabschnittes 7 angeordnet sind. Jeder Durchgangsbohrung 29 für Verbindungsschrauben 30 ist jeweils eine Sacklochbohrung im Lagerelement 2 zugeordnet, die in Verlängerung der Durchgangsbohrungen 29 verlaufen und von der zweiten Befestigungsfläche 15 ausgehen. Die Sacklochbohrungen weisen jeweils ein Innengewinde auf. Die Verbindungsschrauben 30 lassen sich somit entweder durch die Durchgangsbohrung 29 für Verbindungsschrauben 30 hindurchstecken und in die Sacklochbohrungen mit Innengewinden des Lagerelementes 2 einschrauben oder direkt in die Sacklochbohrungen des Basiselementes 1 einschrauben. Die Verbindungsschrauben 30 stehen sodann über die Verbindungsfläche 28 vor und können durch entsprechende Durchgangsbohrungen eines Gegenflansches gesteckt werden und mit Muttern gesichert werden.

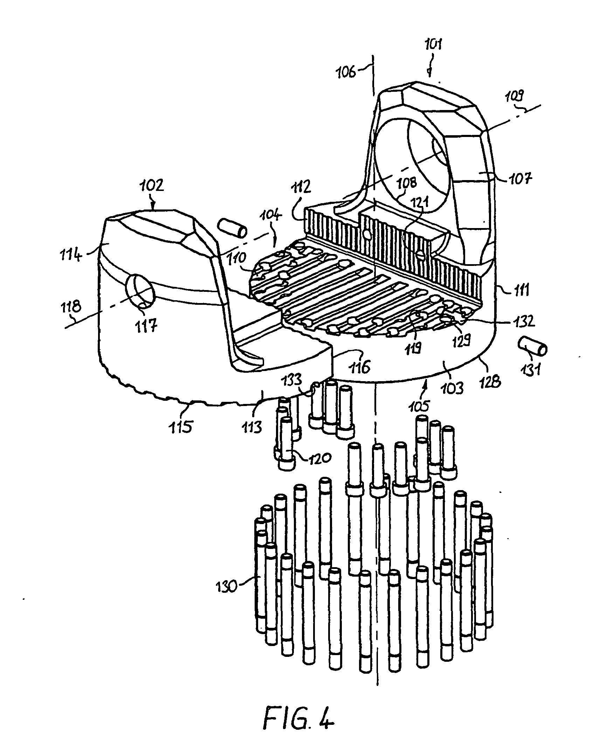

Figur 4 zeigt ein anderes Ausführungsbeispiel eines Flanschmitnehmers gemäß der Figuren 1 bis 3, wobei übereinstimmende Bauteile mit Bezugszeichen versehen sind, die um den Wert 100 erhöht sind und bei den Figuren 1 bis 3 beschrieben sind.

Die erste Anlagefläche 112 und die zweite Anlagefläche 116 weisen jeweils eine komplementär zueinander ausgeführte Verzahnung auf, deren Zähne parallel zur Längsachse 106 verlaufen.

Die radiale Sicherung des Lagerelementes 102 auf dem Basiselement 101 wird in dieser Ausführungsform durch zwei Bolzen 131 erzielt, die jeweils in einer radial verlaufenden ersten Nut 132 in der ersten Befestigungsfläche 110 und in einer zweiten Nut 133 in der zweiten Befestigungsfläche 115 einsitzen.

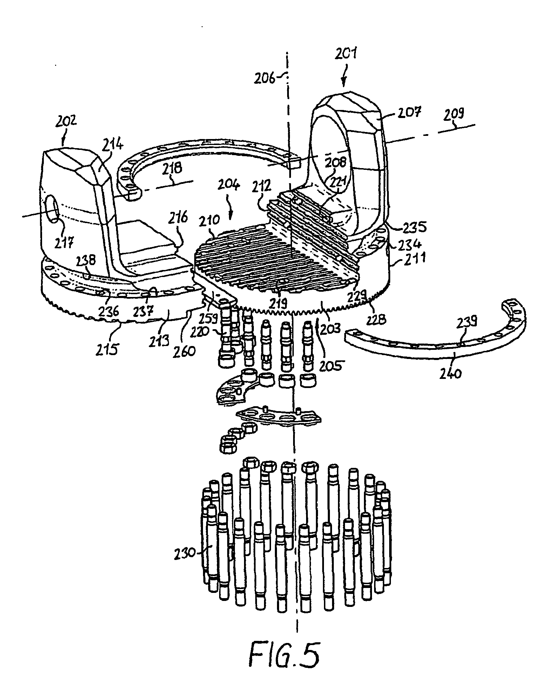

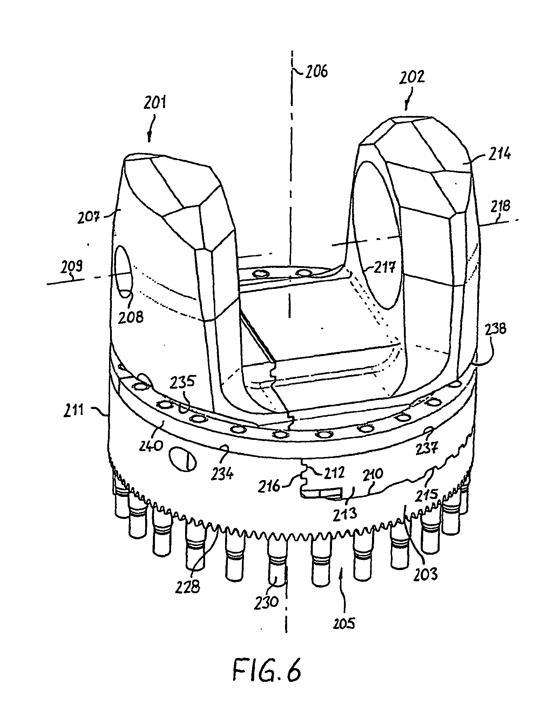

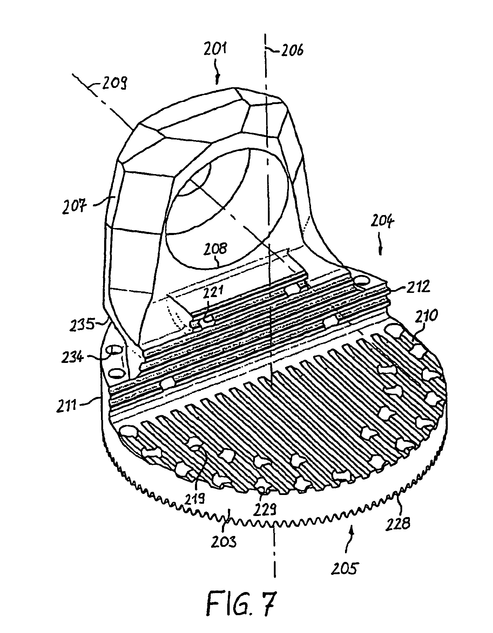

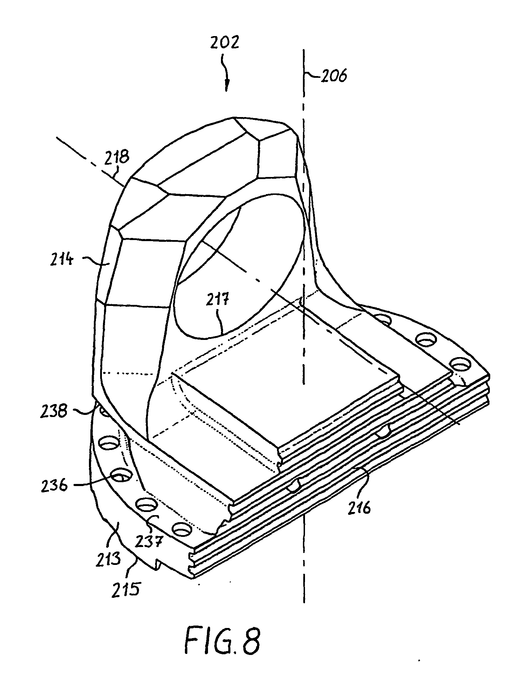

Die Figuren 5, 6, 7 und 8 zeigen eine weitere Ausführungsform eines Flanschmitnehmers gemäß der Figuren 1, 2 und 3, wobei übereinstimmende Bauteile mit Bezugszeichen versehen sind, die um den Wert 200 erhöht sind und bei den Figuren 1 bis 3 beschrieben sind. Im übrigen werden die Figuren 5 bis 8 im folgenden zusammen beschrieben.

Die erste Anlagefläche 212 und die zweite Anlagefläche 216 weisen jeweils eine Verzahnung auf, deren Zähne die Längsachse 206 in Abstand kreuzen. Somit werden Lagerkräfte, die auf die erste Lagerbohrung 208 und auf die zweite Lagerbohrung 217 einwirken und zu Kippkräften in der Ebene der Anlageflächen resultieren, von den Verzahnungen in der ersten Anlagefläche 212 und an der zweiten Anlagefläche 216 aufgenommen.

Zum Verbinden des Flanschmitnehmers mit einem Gegenflansch weist das Basiselement 201 über einen Umfang um die Längsachse 206 gleichmäßig verteilt Durchgangsbohrungen 229 für Verbindungsschrauben 230 auf. Die Durchgangsbohrungen 229, die in Längsrichtung betrachtet im Bereich der ersten Befestigungsfläche 210 angeordnet sind, gehen von der Verbindungsfläche 228 aus und münden in die erste Befestigungsfläche 210. Die Durchgangsbohrungen 229, die in Längsrichtung betrachtet im Bereich des ersten Lagerabschnittes 207 angeordnet sind, gehen von der Verbindungsfläche 228 aus und münden in eine erste Spannfläche 234, die durch eine auf einem Umfang um die Längsachse 206 angeordnete Ausnehmungen 235 gebildet ist. Jeder Durchgangsbohrung 229 im Bereich der ersten Befestigungsfläche 210 ist eine Durchgangsbohrung 236 im Lagerelement 202 zugeordnet, die jeweils in Verlängerung einer Durchgangsbohrung 229 des Basiselementes 201 verlaufen. Die Durchgangsbohrung 236 im Lagerelement 202 gehen von der zweiten Befestigungsfläche 215 aus und münden in eine zweite Spannfläche 237, die durch eine zweite Ausnehmung 238 gebildet ist, die auf einem Umfang um die Längsachse 206 angeordnet ist. Die erste Spannfläche 234 und die zweite Spannfläche 237 bilden zusammen eine ringförmige Spannfläche. Die Verbindungsschrauben 230 lassen sich somit entweder durch die Durchgangsbohrung 229 im Basiselement 201 und durch die Durchgangsbohrungen 236 im Lagerelement hindurchstecken oder durch die Durchgangsbohrung 234 im Bereich des ersten Lagerabschnittes 207 hindurchstecken. Die Verbindungsschrauben 230 lassen sich in Innengewinde 239 von Ringelementen 240 einschrauben. Es sind zwei Ringelemente. 240 vorgesehen, die über den halben Umfang um die Längsachse 206 verlaufen und sich jeweils sowohl gegen die erste Spannfläche 234 als auch gegen die zweite Spannfläche 237 abstützen. Die beiden Ringelemente 240 stoßen in einer Ebene zusammen, die durch die Längsachse und durch die Bohrungsachsen aufgespannt ist. Die Ringelemente 240 übernehmen neben der Funktion der Spannkraftaufnahme in Richtung der Längsachse 206 die radiale Sicherung des Lagerelementes 202 gegenüber dem Basiselement 201, zum einen durch formschlüssigen Kontakt der Ringelemente 240 mit dem Lagerelement 202 und dem Basiselement 201 sowie durch Reibschluß.

Ferner ist bei dieser Ausführungsform eine Druckplatte 259 vorgesehen, die sich einerseits gegen die erste Anlagefläche 212 des Basiselementes 201 abstützt und zum anderen gegen eine Fläche einer Ausnehmung 260 des Lagerelementes 202 abstützt, wobei die Ausnehmung von der zweiten Anlagefläche 216 ausgeht. Mit der Druckplatte 259 können Fertigungsungenauigkeiten zwischen den Verzahnungen der ersten Anlagefläche 212 und der zweiten Anlagefläche 216 ausgeglichen werden. Die Druckplatte 259 kann bei der Montage des Flanschmitnehmers angepasst werden. Die Umfangskräfte werden über die Druckplatte 259 übertragen.

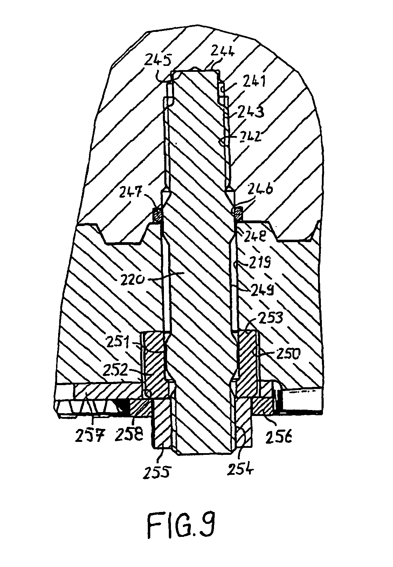

Figur 9 zeigt die Befestigung des Lagerelementes 202 auf dem Basiselement 202 im Querschnitt. Bauteile, die mit Bauteilen der Figuren 5 bis 8 übereinstimmen, sind mit gleichen Bezugszeichen versehen, und bei den Figuren 5 bis 8 beschrieben.

Das Lagerelement 202 weist eine erste Sacklochbohrung 241 auf, die in Verlängerung einer ersten Durchgangsbohrung 219 des Basiselementes 201 angeordnet ist. Die erste Sacklochbohrung 241 weist ein Innengewinde 242 auf. Die eingeschraubte erste Befestigungsschraube 202 weist in diesem Bereich ein Außengewinde 243 auf. Die erste Befestigungsschraube 220 stößt mit einer Stirnfläche 244 gegen eine Grundfläche 245 der ersten Sacklochbohrung 241 an. Die Verschraubung im Bereich des Innengewindes 249 und des Außengewindes 243 wird somit nicht verspannt. Die erste Befestigungsschraube 220 ist lediglich locker eingeschraubt. Die erste Sacklochbohrung 241 geht in einen Bohrungsbereich 246 mit vergrößertem Durchmesser und ohne Innengewinde über. Der Bohrungsbereich 246 mündet in die zweite Befestigungsfläche 215. In dem Bohrungsbereich 246 sitzt ein Dichtring 247 in Form eines Elastomer-Dichtringes ein. Dieser ist zudem mit einer Außenumfangsfläche 248 der zweiten Befestigungsschraube 220 in Anlage. Die erste Sacklochbohrung 241 ist somit nach außen hin abgedichtet, so dass das Eindringen von Feuchtigkeit und Korrosion verhindert wird.

Ausgehend von der Außenumfangsfläche 248 geht die zweite Befestigungsschraube 220 in einen Dehnbereich 249 geringeren Durchmessers über. Der Dehnbereich 249 befindet sich innerhalb der ersten Durchgangsbohrung 219 des Basiselementes 201. Die erste Durchgangsbohrung 219 geht in einen Bohrungsbereich 250 vergrößerten Durchmessers über, der in die Verbindungsfläche 228 mündet. Im Bohrungsbereich 250 weist die zweite Befestigungsschraube 220 eine Außenumfangsfläche in Form eines Sechskants 251 auf. Auf den Sechskant 251 ist eine Hülse 252 aufgeschoben, wobei sich die Hülse 252 gegen eine Schulter 253 im Übergangsbereich der ersten Durchgangsbohrung 219 zum Bohrungsbereich 250 mit vergrößertem Durchmesser ab. Im Anschluß an den Sechskant 251 weist die zweite Befestigungsschraube 220 ein Schraubenende mit einem Außengewinde 254 auf, auf das eine Mutter 255 aufgeschraubt ist, die gegen die Hülse 252 verspannt wird. Über die Mutter ist ein Ring 256 mit einem Innensechskant geschoben. Der Ring 256 ist mit einer Platte 257 verschweißt. Die Platte 257 ist zwischen der Verbindungsfläche 228 und dem Ring 256 angeordnet und weist eine Mehrzahl von Bohrungen 258 auf, durch die jeweils eine zweite Befestigungsschraube 220 gesteckt ist. Der Ring 256 bildet somit zusammen mit der Platte 257 eine Verdrehsicherung.

Zum Lösen der zweiten Befestigungsschraube 220 wird das Ende mit dem Außengewinde 254 und mit der aufgeschraubten Mutter 255, die durch den Ring 256 gesichert ist, mit einem Brennschneider entfernt. Mittels des Sechskants 251 läßt sich die Schraube dann aus der ersten Sacklochbohrung 241 herausschrauben, wobei aufgrund der Abdichtung der ersten Sacklochbohrung 241 eine Korrosion an den Gewinden 242, 243. verhindert ist.

### Bezugszeichenliste

- 1, 101, 201: Basiselement
- 2, 102, 202: Lagerelement
- 3, 103, 203: Flanschplatte
- 4, 104, 204: erste Stirnseite
- 5, 105, 205: zweite Stirnseite
- 6, 106, 206: Längsachse
- 7, 107, 207: erster Lagerabschnitt
- 8, 108, 208: erste Lagerbohrung
- 9, 109, 209: erste Bohrungsachse
- 10, 110, 210: erste Befestigungsfläche
- 11, 111, 211: Außenumfangsfläche
- 12, 112, 212: erste Anlagefläche
- 13, 113, 213: Flanschabschnitt
- 14, 114, 214: zweiter Lagerabschnitt
- 15, 115, 215: zweite Befestigungsfläche
- 16, 116, 216: zweite Anlagefläche
- 17, 117, 217: zweite Lagerbohrung
- 18, 118, 218: zweite Bohrungsachse
- 19, 119, 219: erste Durchgangsbohrung
- 20, 120, 220: erste Befestigungsschraube
- 21, 121, 221: zweite Durchgangsbohrung
- 22, 222: zweite Sacklochbohrung
- 23: Ausnehmung
- 24: Passstück
- 25: dritte Durchgangsbohrung
- 26: Spannhülse
- 27: Dritte Befestigungsschraube
- 28, 128, 228: Verbindungsfläche
- 29, 129, 229: Durchgangsbohrung
- 30, 130, 230: Verbindungsschraube
- 131: Bolzen
- 132: erste Nut
- 133: Zweite Nut
- 234: erste Spannfläche
- 235: erste Ausnehmung
- 236: Durchgangsbohrung
- 237: Zweite Spannfläche
- 238: Zweite Ausnehmung
- 239: Innengewinde
- 240: Ringelement
- 241: erste Sacklochbohrung
- 242: Innengewinde
- 243: Außengewinde
- 244: Stirnfläche
- 245: Grundfläche
- 246: Bohrungsbereich
- 247: Dichtring
- 248: Außenumfangsfläche
- 249: Dehnbereich

- 250: Bohrungsbereich
- 251: Sechskant
- 252: Hülse
- 253: Schulter
- 254: Außengewinde
- 255: Mutter
- 256: Ring
- 257: Platte
- 258: Bohrung
- 259: Druckplatte
- 260: Ausnehmung

## Patentansprüche

1. Flanschmitnehmer
mit einem Basiselement (1, 101, 201), welches
- eine Längsachse (6, 106, 206),
- eine Flanschplatte (3, 103, 203) mit einer ersten Stirnseite (4, 104, 204) und einer zweiten Stirnseite (5, 105, 205),
- einen einstückig mit der Flanschplatte (3, 103, 203) ausgebildeten ersten Lagerabschnitt (7, 107, 207), der ausgehend von der ersten Stirnseite (4, 104, 204) der Flanschplatte (3, 103, 203) vorsteht und der eine erste Lagerbohrung (8, 108, 208) mit einer die Längsachse (6, 106, 206) rechtwinklig schneidenden ersten Bohrungsachse (9, 109, 209) aufweist,
- eine erste Befestigungsfläche (10, 110, 210), die an der ersten Stirnseite (4, 104, 204) der Flanschplatte (3, 103, 203) vorgesehen ist,
- eine erste Anlagefläche (12, 112, 212), die von der ersten Befestigungsfläche (10, 110, 210) ausgeht und auf einer in ihrer Verlängerung die erste Bohrungsachse (9, 109, 209) schneidenden Ebene angeordnet ist, sowie
- eine Verbindungsfläche (28, 128, 228),
- die an der zweiten Stirnseite (5, 105, 205) der Flanschplatte (3, 103, 203) angeordnet ist, und wobei der Flanschmitnehmer (ausschließlich über die Verbindungsfläche (28,128,228) des Basiselements (1, 101, 201) mit einem Gegenflansch verbindbar ist,
aufweist, und
mit einem Lagerelement (2, 102, 202), welches
- einen Flanschabschnitt (13, 113, 213),
- der eine zweite Befestigungsfläche (15, 115, 215) bildet, die mit der ersten Befestigungsfläche (10, 110, 210) des Basiselements (1, 101, 201) in Anlage ist, und
- der eine zweite Anlagefläche (16, 116, 216) bildet, die mit der ersten Anlagefläche (12, 112, 212) des Basiselements (1, 101, 201) in Anlage ist, sowie
- einen zweiten Lagerabschnitt (14, 114, 214), der eine zweite Lagerbohrung (17, 117, 217) mit einer zweiten Bohrungsachse (18, 118, 218), die koaxial zur ersten Bohrungsachse (9, 109, 209) angeordnet ist,
aufweist,
wobei das Lagerelement (2, 102, 202) mittels Befestigungsschrauben (20, 27, 120, 220) lösbar mit dem Basiselement (1, 101, 201) verbunden ist.
**dadurch gekennzeichnet,**
**dass** zum Übertragen von Momenten um die Längsachse (6, 106, 206) die erste Befestigungsfläche (10, 110, 210) eine Verzahnung und die zweite Befestigungsfläche (15, 115, 215) eine Verzahnung aufweisen, wobei die Verzahnungen zueinander komplementär ausgebildet sind und
**dass** die Zähne der Verzahnung der ersten Befestigungsfläche (10, 110, 210) und die Zähne der Verzahnung der zweiten Befestigungsfläche (15, 115, 215) parallel zur ersten Bohrungsachse (9, 109, 209) verlaufen.

2. Flanschmitnehmer nach Anspruch 1,
**dadurch gekennzeichnet,**
**dass** die Befestigungsschrauben (220) in Form von Dehnschrauben gestaltet sind.

3. Flanschmitnehmer nach einem der Ansprüche 1 oder 2,
**dadurch gekennzeichnet,**
**dass** in dem Flanschabschnitt (13, 113, 213) des Lagerelements (2, 102, 202) erste Sacklochbohrungen mit Innengewinde vorgesehen sind, die parallel zur Längsachse (6, 106, 206) verlaufen,
**dass** jeder ersten Sacklochbohrung eine erste Durchgangsbohrung (19, 119, 219) in der Flanschplatte (3, 103, 203) des Basiselements (1, 101, 201) zugeordnet ist, die ausgehend von der Verbindungsfläche (28, 128, 228) in die erste Befestigungsfläche (10, 110, 210) mündet,
wobei ersten Befestigungsschrauben (20, 120, 220) durch die ersten Durchgangsbohrungen (19, 119, 219) hindurch gesteckt sind und in den ersten Sacklochbohrungen einsitzen.

4. Flanschmitnehmer nach Anspruch 3,
**dadurch gekennzeichnet,**
**dass** die ersten Befestigungsschrauben (20, 120, 220) Schraubenenden auf weisen, die in der Verbindungsfläche (28, 128, 228) versenkt aufgenommen sind.

5. Flanschmitnehmer nach einem der Ansprüche 1 bis 4,
**dadurch gekennzeichnet,**
**dass** in dem Flanschabschnitt (13) des Lagerelements (2) dritte Sacklochbohrungen vorgesehen sind, die parallel zur Längsachse (6) verlaufen und jeweils in eine Sacklochbohrung mit Innengewinde übergehen,
**dass** jeder ersten Sacklochbohrung eine dritte Durchgangsbohrung (25) in der Flanschplatte (3) des Basiselements (1) zugeordnet ist, die ausgehend von der Verbindungsfläche (28) in die erste Befestigungsfläche (10) mündet,
wobei die dritte Durchgangsbohrung (25) und die dritte Sacklochbohrung zusammen eine konische Innenfläche aufweisen, in die eine Spannhülse (26) mit konischer Außenumfangsfläche eingesteckt ist, und
wobei dritte Befestigungsschrauben (27) jeweils durch eine Durchgangsbohrung einer Spannhülse (26) hindurch gesteckt sind und jeweils in einer der Sacklochbohrungen mit Innengewinde einsitzen.

6. Flanschmitnehmer nach Anspruch 5,
**dadurch gekennzeichnet,**
**dass** die dritten Befestigungsschrauben (27) Schraubenenden aufweisen, die in der Verbindungsfläche (28) versenkt aufgenommen sind.

7. Flanschmitnehmer nach einem der Ansprüche 1 bis 6,
**dadurch gekennzeichnet,**
**dass** in der ersten Befestigungsfläche (110) und in der zweiten Befestigungsfläche (115) zumindest eine Feder-Nut-Verbindung (131, 132, 133) vorgesehen ist.

8. Flanschmitnehmer nach einem der Ansprüche 1 bis 7,
**dadurch gekennzeichnet,**
**dass** in dem Flanschabschnitt (13, 113, 213) des Lagerelements (2, 102, 202) zweite Sacklochbohrungen (22, 122, 222) mit Innengewinde vorgesehen sind, die parallel zur zweiten Bohrungsachse (18, 118, 218) verlaufen,
**dass** jeder zweiten Sacklochbohrung (22, 122, 222) eine zweite Durchgangsbohrung (21, 121, 221) in der Flanschplatte (3, 103, 203) des Basiselements (1, 101, 201) zugeordnet ist, die ausgehend von der zweiten Anlagefläche (16, 116, 216) in eine Außenumfangsfläche (11, 111, 211) des Basiselements (1, 101, 201) mündet,
wobei zweite Befestigungsschrauben durch die zweiten Durchgangsbohrungen (21, 121, 221) hindurch gesteckt sind und in den zweiten Sacklochbohrungen (22, 122, 222) einsitzen.

9. Flanschmitnehmer nach Anspruch 8,
**dadurch gekennzeichnet,**
**dass** die zweiten Befestigungsschrauben Schraubenenden aufweisen, die in der Außenumfangsfläche (11, 111, 211) versenkt aufgenommen sind.

10. Flanschmitnehmer nach einem der Ansprüche 1 bis 9,
**dadurch gekennzeichnet,**
**dass** die erste Anlagefläche (112, 212) und die zweite Anlagefläche (116, 216) jeweils Mittel zum Übertragen von Kräften in der Ebene der Anlageflächen aufweisen.

11. Flanschmitnehmer nach Anspruch 10,
**dadurch gekennzeichnet,**
**dass** die erste Anlagefläche (112, 212) und die zweite Anlagefläche (116, 216) jeweils zueinander komplementäre Verzahnungen aufweisen.

12. Flanschmitnehmer nach Anspruch 11,
**dadurch gekennzeichnet,**
**dass** die Zähne der Verzahnungen der ersten Anlagefläche (112) und die Zähne der Verzahnung der zweiten Anlagefläche (116) parallel zur Längsachse (106) verlaufen.

13. Flanschmitnehmer nach Anspruch 11,
**dadurch gekennzeichnet,**
**dass** die Zähne der Verzahnung der ersten Anlagefläche (212) und die Zähne der Verzahnung der zweiten Anlagefläche (216) die Längsachse (206) in Abstand senkrecht kreuzen.

14. Flanschmitnehmer nach einem der Ansprüche 1 bis 13,
**dadurch gekennzeichnet,**
**dass** in der zweiten Anlagefläche (16) Ausnehmungen (23) vorgesehen sind, in denen jeweils ein Paßstück einsitzt, das sich gegen die erste Anlagefläche (12) abstützt.

15. Flanschmitnehmer nach einem der Ansprüche 1 bis 14,
**dadurch gekennzeichnet,**
**dass** die Verbindungsfläche (28, 128, 228) Zentriermittel zum Zentrieren der Flanschplatte (3, 103, 203) gegenüber einer Längsachse des Gegenflansches aufweist.

16. Flanschmitnehmer nach Anspruch 15,
**dadurch gekennzeichnet,**
**dass** die Zentriermittel durch eine selbstzentrierende Stirnverzahnung, insbesondere eine Hirth-Stirnverzahnung, gebildet sind.

17. Flanschmitnehmer nach einem der Ansprüche 1 bis 16,
**dadurch gekennzeichnet,**
**dass** in der Flanschplatte (3, 103) des Basiselements (1, 101) Durchgangsbohrungen (29, 129) vorgesehen sind, die auf einem Teilumfang um die Längsachse (6, 106) im Bereich der ersten Befestigungsfläche (10, 110) gleichmäßig verteilt sind und parallel zur Längsachse (6, 106) verlaufen und durch die eine erste Teilanzahl von Verbindungsschrauben (30, 130) hindurch gesteckt ist,
**dass** jeder Durchgangsbohrung (29, 129) eine Sacklochbohrung mit Innengewinde im Lagerelement (2, 102) zugeordnet ist, wobei die Sacklochbohrungen in der Verlängerung der jeweiligen Durchgangsbohrung (29, 129) des Basiselements (1, 101) verlaufen und von der zweiten Befestigungsfläche (15, 115) ausgehen und wobei die erste Teilanzahl der Verbindungsschrauben (30, 130) in die Sacklochbohrungen eingeschraubt ist,
**dass** in der Flanschplatte (3, 103) des Basiselements (1, 101) Sacklochbohrungen mit Innengewinden vorgesehen sind, die auf dem übrigen Teilumfang um die Längsachse (6, 106) im Bereich des ersten Lagerabschnitts (7, 107) gleichmäßig verteilt sind und in denen eine zweite Teilanzahl von Verbindungsschrauben (30, 130) eingeschraubt ist.

18. Flanschmitnehmer nach einem der Ansprüche 1 bis 16,
**dadurch gekennzeichnet,**
**dass** in der Flanschplatte (203) des Basiselements (201) Durchgangsbohrungen (229) vorgesehen sind, die auf einem Teilumfang um die Längsachse (206) im Bereich der ersten Befestigungsfläche (210) gleichmäßig verteilt sind und parallel zur Längsachse (206) verlaufen und durch die eine erste Teilanzahl von Verbindungsschrauben (230) hindurch gesteckt ist,
**dass** jeder Durchgangsbohrung (229) eine Durchgangsbohrung (236) im Lagerelement (202) zugeordnet ist, wobei die Durchgangsbohrung (236) im Lagerelement (202) in der Verlängerung der jeweiligen Durchgangsbohrung (229) des Basiselements (201) verlaufen und von der zweiten Befestigungsfläche (215) ausgehend in eine zweite Spannfläche (237) münden und wobei die erste Teilanzahl der Verbindungsschrauben (230) ausgehend von der Verbindungsfläche (228) durch die Durchgangsbohrung (229) des Basiselements (201) und durch die Durchgangsbohrung (236) im Lagerelement (202) durchgesteckt ist und in Innengewinde (239) eines Gewindekörpers, der sich gegen die zweite Spannfläche (237) abstützt, geschraubt ist,
**dass** in der Flanschplatte (203) des Basiselements (201) Durchgangsbohrungen vorgesehen sind, die auf dem übrigen Teilumfang um die Längsachse (206) im Bereich des ersten Lagerabschnitts (207) gleichmäßig verteilt sind, die parallel zur Längsachse (206) verlaufen und ausgehend von der Verbindungsfläche (228) in eine erste Spannfläche (234) münden, wobei eine zweite Teilanzahl der Verbindungsschrauben (230) ausgehend von der Verbindungsfläche (228) durch die Durchgangsbohrungen gesteckt ist und in Innengewinde (239) eines Gewindekörpers, der sich gegen die erste Spannfläche (234) abstützt, geschraubt ist.

19. Flanschmitnehmer nach Anspruch 18,
**dadurch gekennzeichnet,**
**dass** die erste Spannfläche (235) durch eine erste Ausnehmung (235) in der Außenumfangsfläche (211) des Basiselements (201) gebildet ist und
**dass** die zweite Spannfläche (237) durch eine zweite Ausnehmung (238) in der Außenumfangsfläche (211) des Lagerelements (202) gebildet ist.

20. Flanschmitnehmer nach einem der Ansprüche 18 oder 19,
**dadurch gekennzeichnet,**
**dass** der Gewindekörper durch einen Ring gebildet ist, der sich gegen die erste Spannfläche (235) und gegen die zweite Spannfläche (237) abstützt und in einer Ebene, die durch die Längsachse (206) und die erste Bohrungsachse (209) aufgespannt ist, in zwei Ringelemente (240) geteilt ist.

## Claims

1. Flange yoke
with a base element (1, 101, 201), which has
- a longitudinal axis (6, 106, 206),
- a flange plate (3, 103, 203) with a first end face (4, 104, 204) and a second end face (5, 105, 205),
- a first bearing portion (7, 107, 207), formed integrally with the flange plate (3, 103, 203) and projecting from the first end face (4, 104, 204) of the flange plate (3, 103, 203) and which has a first bearing bore (8, 108, 208) with a first bore axis (9, 109, 209) intersecting perpendicularly the longitudinal axis (6, 106, 206),
- a first attachment face (10, 110, 210), which is provided at the first end face (4, 104, 204) of the flange plate (3, 103, 203),
- a first abutment face (12, 112, 212), which starts from the first attachment face (10, 110, 210) and is arranged on a plane, intersecting with its extension the first bore axis (9, 109, 209), as well as
- a connection face (28, 128, 228),
- which is arranged on the second end face (5, 105, 205) of the flange plate (3, 103, 203), and wherein the flange yoke is solely connectable via the connection face (28, 128, 228) of the base element (1, 101, 201) to a counter flange, and
with a bearing element (2, 102, 202), which has
- a flange portion (13, 113, 213), which
- forms a second attachment face (15, 115, 215), that abuts the first attachment face (10, 110, 210) of the base element (1, 101, 201), and
- forms a second abutment face (16, 116, 216), that abuts the first abutment face (12, 112, 212) of the base element (1, 101, 201), as well as
- has a second bearing portion (14, 114, 214), that has a second bearing bore (17, 117, 217) with a second bore axis (18, 118, 218), arranged coaxially to the first bore axis (9, 109, 209),
wherein the bearing element (2, 102, 202) is detachably connected to the base element (1, 101, 201) by attachment screws (20, 27, 120, 220),
**characterised in**
**that** for transmitting torque around the longitudinal axis (6, 106, 206) the first attachment face (10, 110, 210) has a toothing and that the second attachment face (15, 115, 215) has a toothing, wherein the toothings are formed complementary to each other, and
**that** the teeth of the toothing of the first attachment face (10, 110, 210) and the teeth of the toothing of the second attachment face (15, 115, 215) extend parallel to the first bore axis (9, 109, 209).

2. Flange yoke according to claim 1,
**characterised in that**
the attachment screws (220) are formed as screws with reduced waist.

3. Flange yoke according to one of claims 1 or 2,
**characterised in**
**that** in the flange portion (13, 113, 213) of the bearing element (2, 102, 202) first blind holes with internal thread are provided, which extend parallel to the longitudinal axis (6, 106, 206),
**that** to each first blind hole, a first through bore (19, 119, 219) is arranged in the flange plate (3, 103, 203) of the base element (1, 101, 201), which ends, starting from the connection face (28, 128, 228), in the first attachment face (10, 110, 210),
wherein first attachment screws (20, 120, 220) are passed through the first through bores (19, 119, 219) and rest in the first blind holes.

4. Flange yoke according to claim 3,
**characterised in that**
the first attachment screws (20, 120, 220) have screw ends, which are accommodated in the connection face (28, 128, 228) in a countersunk manner.

5. Flange yoke according to one of claims 1 to 4,
**characterised in**
**that** in the flange portion (13) of the bearing element (2), third blind holes are provided, which extend parallel to the longitudinal axis (6) and end, respectively, in a blind hole with internal thread,
**that** to each first blind hole, a third through bore (25) is arranged in the flange plate (3) of the base element (1), which, starting from the connection face (28), ends in the first attachment face (10),
wherein the third through bore (25) and the third blind hole have together a conical inner face, into which a clamping sleeve (26) with a conical outer circumferential face is inserted, and
wherein third attachment screws (27) are, respectively, passed through a through bore of a clamping sleeve (26) and, respectively, rest in one of the blind holes with internal thread.

6. Flange yoke according to claim 5,
**characterised in that**
the third attachment screws (27) have screw ends, which are accommodated in the connection face (28) in a countersunk manner.

7. Flange yoke according to one of claims 1 to 6,
**characterised in that**
in the first attachment face (110) and in the second attachment face (115) at least one tongue-and-groove-connection (131, 132, 133) is provided.

8. Flange yoke according to one of claims 1 to 7,
**characterised in**
**that** in the flange portion (13, 113, 213) of the bearing element (2, 102, 202), second blind holes (22, 122, 222) with internal thread are provided, which extend parallel to the second bore axis (18, 118, 218),
**that** to each second blind hole (22, 122, 222), a second through bore (21, 121, 221) is arranged in the flange plate (3, 103, 203) of the base element (1, 101, 201), which, starting from the second abutment face (16, 116, 216), ends in an outer circumferential face (11, 111, 211) of the base element (1, 101, 201),
wherein second attachment screws are passed through the second through bores (21, 121, 221) and rest in the second blind holes (22, 122, 222).

9. Flange yoke according to claim 8,
**characterised in that**
the second attachment screws have screw ends, which are accommodated in the outer circumferential face (11, 111, 211) in a countersunk manner.

10. Flange yoke according to one of claims 1 to 9,
**characterised in that**
the first abutment face (112, 212) and the second abutment face (116, 216) have, respectively, means for transmitting forces in the plane of the abutment faces.

11. Flange yoke according to claim 10,
**characterised in that**
the first abutment face (112, 212) and the second abutment face (116, 216) have, respectively, toothings formed complementary to each other.

12. Flange yoke according to claim 11,
**characterised in that**
the teeth of the toothing of the first abutment face (112) and the teeth of the toothing of the second abutment face (116) extend parallel to the longitudinal axis (106).

13. Flange yoke according to claim 11,
**characterised in that**
the teeth of the toothing of the first abutment face (212) and the teeth of the toothing of the second abutment face (216) intersect perpendicularly the longitudinal axis (206) at a distance.

14. Flange yoke according to one of claims 1 to 13,
**characterised in that**
in the second abutment face (16), recesses (23) are provided, in which, respectively, a fitting intermediate piece rests, which abuts the first abutment face (12).

15. Flange yoke according to one of claims 1 to 14,
**characterised in that**
the connection face (28, 128, 228) has centring means for centring the flange plate (3, 103, 203) relative to a longitudinal axis of the counter flange.

16. Flange yoke according to claim 15,
**characterised in that**
the centring means are formed by a self-centring front toothing, especially a Hirth-type serration.

17. Flange yoke according to one of claims 1 to 16,
**characterised in**
**that** in the flange plate (3, 103) of the base element (1, 101) through bores (29, 129) are provided, which are equidistantly distributed on a partial circumference around the longitudinal axis (6, 106) in the area of the first attachment face (10, 110) and extend parallel to the longitudinal axis (6, 106) and through which a first submultiple partial number of connection screws (30, 130) are passed,
**that** to each through bore (29, 129), a blind hole with internal thread is arranged in the bearing element (2, 102), wherein the blind holes extend in the extension of the respective through bore (29, 129) of the base element (1, 101) and start from the second attachment face (15, 115) and wherein the first submultiple number of connection screws (30, 130) is screwed into the blind holes,
**that** in the flange plate (3, 103) of the base element (1, 101), blind holes with internal thread are provided, which are equally distributed on the residual partial circumference and into which a second submultiple number of connection screws (30, 130) is screwed.

18. Flange yoke according to one of claims 1 to 16,
**characterised in**
**that** in the flange plate (203) of the base element (201), through bores (229) are provided, which are equidistantly distributed on a partial circumference around the longitudinal axis (206) in the area of the first attachment face (210) and extend parallel to the longitudinal axis (206) and through which a first submultiple number of connection screws (230) is passed through,
**that** to each through bore (229), a through bore (236) is arranged in the bearing element (202), wherein the through bore (236) extends in the bearing element (202) along the extension of the respective through bore (229) of the base element (201) and, starting from the second attachment face (215), ends in a second clamping face (237) and wherein the first submultiple number of connection screws (230) is passed, starting from the connection face (228), through the through bore (229) of the base element (201) and through the through bore (236) in the bearing element (239) and is screwed into an internal thread (239) of a threaded body, which is supported on the second clamping face (237),
**that** in the flange plate (203) of the base element (201), through bores are provided, which are distributed with equal distance on the residual partial circumference around the longitudinal axis (206) in the area of the first bearing portion (207) and which extend parallel to the longitudinal axis (206) and, starting from the connection face (228), end in a first clamping face (234), wherein a second submultiple number of connection screws (230), starting from the connection face (228), is passed through the through bores and is screwed into an internal thread (239) of a threaded body, which is supported on the first clamping face (234).

19. Flange yoke according to claim 18,
**characterised in**
**that** the first clamping face (235) is formed by a first recess (235) in the outer circumferential face (211) of the base element (201) and
**that** the second clamping face (237) is formed by a second recess (238) in the outer circumferential face (211) of the bearing element (202).

20. Flange yoke according to one of claims 18 or 19,
**characterised in that**
the threaded body is formed by a ring, which is supported on the first clamping face (235) and the second clamping face (237) and is split in a plane, which is formed by the longitudinal axis (206) and the first bore axis (209), into two annular elements (240).

## Revendications

1. Entraîneur à flasque,
comprenant un élément de base (1, 101, 201) qui présente
- un axe longitudinal (6, 106, 206),
- une plaque de flasque (3, 103, 203) avec une première face frontale (4, 104, 204) et une deuxième face frontale (5, 105, 205),
- un premier tronçon de palier (7, 107, 207) qui est réalisé d'un seul tenant avec la plaque de flasque (3, 103, 203), fait saillie de la première face frontale (4, 104, 204) de la plaque de flasque (3, 103, 203) et comporte un premier alésage de palier (8, 108, 208) avec un premier axe d'alésage (9, 109, 209) coupant l'axe longitudinal (6, 106, 206) de manière perpendiculaire,
- une première surface de fixation (10, 110, 210) qui est prévue sur la première face frontale (4, 104, 204) de la plaque de flasque (3, 103, 203),
- une première surface d'appui (12, 112, 212) qui est issue de la première surface de fixation (10, 110, 210) et est agencée sur un plan coupant dans son prolongement le premier axe d'alésage (9, 109, 209), ainsi
- qu'une surface de liaison (28, 128, 228)
- qui est agencée sur la deuxième face frontale (5, 105, 205) de la plaque de flasque (3, 103, 203), et l'entraîneur à flasque pouvant être relié exclusivement par l'intermédiaire de la surface de liaison (28, 128, 228) de l'élément de base (1, 101, 201) à un flasque conjugué,
et
comprenant également un élément de palier (2, 102, 202) qui présente
- un tronçon de flasque (13, 113, 213),
- qui forme une deuxième surface de fixation (15, 115, 215) en appui réciproque sur la première surface de fixation (10, 110, 210) de l'élément de base (1, 101, 201), et
- qui forme une deuxième surface d'appui (16, 116, 216) en appui réciproque sur la première surface d'appui (12, 112, 212) de l'élément de base (1, 101, 201), ainsi
- qu'un deuxième tronçon de palier (14, 114, 214) qui comporte un deuxième alésage de palier (17, 117, 217) avec un deuxième axe d'alésage (18, 118, 218), qui est agencé coaxialement au premier axe d'alésage (9, 109, 209),
l'élément de palier (2, 102, 202) étant relié ou assemblé de manière démontable à l'élément de base (1, 101, 201), au moyen de vis de fixation (20, 27, 120, 220),
**caractérisé en ce que** pour la transmission de couples autour de l'axe longitudinal (6, 106, 206), la première surface de fixation (10, 110, 210) présente une denture et la deuxième surface de fixation (15, 115, 215) présente également une denture, les dentures étant réalisées mutuellement complémentaires, et **en ce que** les dents de la denture de la première surface de fixation (10, 110, 210) et les dents de la denture de la deuxième surface de fixation (15, 115, 215) s'étendent parallèlement au premier axe d'alésage (9, 109, 209).

2. Entraîneur à flasque selon la revendication 1,
**caractérisé en ce que** les vis de fixation (220) sont conçues sous la forme de vis d'allongement.

3. Entraîneur à flasque selon l'une des revendications 1 ou 2,
**caractérisé en ce que** dans le tronçon de flasque (13, 113, 213) de l'élément de palier (2, 102, 202) sont prévus de premiers perçages borgnes à filetage intérieur, qui s'étendent parallèlement à l'axe longitudinal (6, 106, 206), **en ce qu'**à chaque premier perçage borgne est associé un premier perçage de passage (19, 119, 219) dans la plaque de flasque (3, 103, 203) de l'élément de base (1, 101, 201), qui est issu de la surface de liaison (28, 128, 228) et débouche dans la première surface de fixation (10, 110, 210), des premières vis de fixation (20, 120, 220) étant engagées à travers les premiers perçages de passage (19, 119, 219) et insérées dans les premiers perçages borgnes.

4. Entraîneur à flasque selon la revendication 3,
**caractérisé en ce que** les premières vis de fixation (20, 120, 220) présentent des extrémités de vis qui sont reçues dans la surface de liaison (28, 128, 228) en y étant noyées.

5. Entraîneur à flasque selon l'une des revendications 1 à 4,
**caractérisé en ce que** dans le tronçon de flasque (13) de l'élément de palier (2) sont prévus des troisièmes perçages borgnes qui s'étendent parallèlement à l'axe longitudinal (6) et se transforment respectivement en un perçage borgne avec filetage intérieur, et **en ce qu'**à chaque perçage borgne est associé un perçage de passage (25) dans la plaque de flasque (3) de l'élément de base (1), qui est issu de la surface de liaison (28) et débouche dans la première surface de fixation (10), le troisième perçage de passage (25) et le troisième perçage borgne présentant ensemble une surface intérieure conique dans laquelle est emmanchée une douille de serrage (26) à surface périphérique extérieure conique, et des troisièmes vis de fixation (27) étant engagées respectivement à travers un perçage de passage d'une douille de serrage (26) et insérées respectivement dans l'un des perçages borgnes avec filetage intérieur.

6. Entraîneur à flasque selon la revendication 5,
**caractérisé en ce que** les troisièmes vis de fixation (27) présentent des extrémités de vis qui sont reçues dans la surface de liaison (28) en y étant noyées.

7. Entraîneur à flasque selon l'une des revendications 1 à 6,
**caractérisé en ce que** dans la première surface de fixation (110) et dans la deuxième surface de fixation (115), il est prévu au moins une liaison par talon et rainure (131, 132, 133).

8. Entraîneur à flasque selon l'une des revendications 1 à 7,
**caractérisé en ce que** dans le tronçon de flasque (13, 113, 213) de l'élément de palier (2, 102, 202) sont prévus des deuxièmes perçages borgnes (22, 122, 222) à filetage intérieur, qui s'étendent parallèlement au deuxième axe d'alésage (18, 118, 218), et **en ce qu'**à chaque deuxième perçage borgne (22, 122, 222) est associé un deuxième perçage de passage (21, 121, 221) dans la plaque de flasque (3, 103, 203) de l'élément de base (1, 101, 201), qui est issu de la deuxième surface d'appui (16, 116, 216) et débouche dans une surface périphérique extérieure (11, 111, 211) de l'élément de base (1, 101, 201), des deuxièmes vis de fixation étant engagées à travers les deuxièmes perçages de passage (21, 121, 221) et insérées dans les deuxièmes perçages borgnes (22, 122, 222).

9. Entraîneur à flasque selon la revendication 8,
**caractérisé en ce que** les deuxièmes vis de fixation présentent des extrémités de vis qui sont reçues dans la surface périphérique extérieure (11, 111, 211) en y étant noyées.

10. Entraîneur à flasque selon l'une des revendications 1 à 9,
**caractérisé en ce que** la première surface d'appui (112, 212) et la deuxième surface d'appui (116, 216) présentent respectivement des moyens pour la transmission de forces dans le plan des surfaces d'appui.

11. Entraîneur à flasque selon la revendication 10,
**caractérisé en ce que** la première surface d'appui (112, 212) et la deuxième surface d'appui (116, 216) présentent respectivement des dentures mutuellement complémentaires.

12. Entraîneur à flasque selon la revendication 11,
**caractérisé en ce que** les dents des dentures de la première surface d'appui (112) et les dents de la denture de la deuxième surface d'appui (116) s'étendent parallèlement à l'axe longitudinal (106).

13. Entraîneur à flasque selon la revendication 11,
**caractérisé en ce que** les dents de la denture de la première surface d'appui (212) et les dents de la denture de la deuxième surface d'appui (216) croisent perpendiculairement et à distance l'axe longitudinal (206).

14. Entraîneur à flasque selon l'une des revendications 1 à 13,
**caractérisé en ce que** dans la deuxième surface d'appui (16) sont prévus des évidements (23) dans chacun desquels est logée une pièce d'ajustement qui s'appuie contre la première surface d'appui (12).

15. Entraîneur à flasque selon l'une des revendications 1 à 14,
**caractérisé en ce que** la surface de liaison (28, 128, 228) présente des moyens de centrage pour centrer la plaque de flasque (3, 103, 203) par rapport à un axe longitudinal du flasque conjugué.

16. Entraîneur à flasque selon la revendication 15,
**caractérisé en ce que** les moyens de centrage sont formés par une denture frontale à auto-centrage, notamment une denture frontale plane dite de Hirth.

17. Entraîneur à flasque selon l'une des revendications 1 à 16,
**caractérisé en ce que** dans la plaque de flasque (3, 103) de l'élément de base (1, 101) sont prévus des perçages de passage (29, 129) qui sont répartis de manière régulière sur une circonférence partielle autour de l'axe longitudinal (6, 106), dans la zone de la première surface de fixation (10, 110), et s'étendent parallèlement à l'axe longitudinal (6, 106) et à travers lesquels sont emmanchées un premier nombre partiel de vis de liaison (30, 130), **en ce qu'**à chaque perçage de passage (29, 129) est associé un perçage borgne à filetage intérieur dans l'élément de palier (2, 102), les perçages borgnes s'étendant dans le prolongement du perçage de passage (29, 129) respectif de l'élément de base (1, 101), et étant issus de la deuxième surface de fixation (15, 115), et le premier nombre partiel des vis de liaison (30, 130) étant vissées dans les perçages borgnes, et **en ce que** dans la plaque de flasque (3, 103) de l'élément de base (1, 101) sont prévus des perçages borgnes à filetages intérieurs, qui sont répartis de manière régulière sur le reste de la circonférence partielle autour de l'axe longitudinal (6, 106), dans la zone du premier tronçon de palier (7, 107), et dans lesquels sont vissées un deuxième nombre partiel de vis de liaison (30, 130).

18. Entraîneur à flasque selon l'une des revendications 1 à 16,
**caractérisé en ce que** dans la plaque de flasque (203) de l'élément de base (201) sont prévus des perçages de passage (229) qui sont répartis de manière régulière sur une circonférence partielle autour de l'axe longitudinal (206), dans la zone de la première surface de fixation (210), et s'étendent parallèlement à l'axe longitudinal (206) et à travers lesquels sont emmanchées un premier nombre partiel de vis de liaison (230), **en ce qu'**à chaque perçage de passage (229) est associé un perçage de passage (236) dans l'élément de palier (202), les perçages de passage (236) dans l'élément de palier (202) s'étendant dans le prolongement du perçage de passage (229) respectif de l'élément de base (201) et étant issus de la deuxième surface de fixation (215) et débouchant dans une deuxième surface de serrage (237), et le premier nombre partiel des vis de liaison (230) étant engagées, à partir de la surface de liaison (228), à travers les perçages de passage (229) de l'élément de base (201) et à travers les perçages de passage (236) dans l'élément de palier (202), et vissées dans des filetages intérieurs (239) d'un corps à filetages, qui s'appuie sur la deuxième surface de serrage (237), et **en ce que** dans la plaque de flasque (203) de l'élément de base (201) sont prévus des perçages de passage répartis de manière régulière sur le reste de la circonférence partielle, autour de l'axe longitudinal (206), dans la zone du premier tronçon de palier (207), qui s'étendent parallèlement à l'axe longitudinal (206) et débouchent, en étant issus de la surface de liaison (228), dans une première surface de serrage (234), un deuxième nombre partiel des vis de liaison (230) étant engagées, à partir de la surface de liaison (228), à travers les perçages de passage, et vissées dans des filetages intérieurs (239) d'un corps à filetages, qui s'appuie sur la première surface de serrage (234).

19. Entraîneur à flasque selon la revendication 18,
**caractérisé en ce que** la première surface de serrage (235) est formée par un premier évidement (235) dans la surface périphérique extérieure (211) de l'élément de base (201), et **en ce que** la deuxième surface de serrage (237) est formée par un deuxième évidement (238) dans la surface périphérique extérieure (211) de l'élément de palier (202).

20. Entraîneur à flasque selon l'une des revendications 18 ou 19,
**caractérisé en ce que** le corps à filetages est formé par un anneau qui s'appuie sur la première surface de serrage (235) et sur la deuxième surface de serrage (237), et est divisé en deux éléments d'anneau (240) dans un plan défini par l'axe longitudinal (206) et le premier axe d'alésage (209).
